# EUROPEAN PATENT APPLICATION

(11) **EP 1 876 593 A1**
(43) Date of publication of application: **09.01.2008**
(21) Application number: 07011709.8
(22) Date of filing: 14.06.2007
(51) Int. Cl.: G11B 20/18, H04N 17/06

(54) **Method and apparatus for inspecting a recording medium and for inspecting a recording medium drive**

(30) Priority: 06.07.2006 JP 2006186810
(71) Applicant: FUJIFILM Corporation, Minato-ku Tokyo 106-8620 (JP)
(72) Inventor: Horimai, Kiyoshi, Odawara-shi Kanagawa 250-0001 (JP); Murano, Hitoshi, Odawara-shi Kanagawa 250-0001 (JP); Komori, Noboru, Odawara-shi Kanagawa 250-0001 (JP); Suda, Takashi, Odawara-shi Kanagawa 250-0001 (JP)
(74) Representative: Grünecker, Kinkeldey, Stockmair & Schwanhäusser Anwaltssozietät

(57) **Abstract**

An apparatus is provided for inspecting a recording medium, for thereby detecting a defect in the recording medium, in which the apparatus includes inspection subjects made up of first to fourth recording media (12A to 12D) on which audio signals having a constant frequency are recorded. The apparatus further includes first to fourth non-defective drives (14A to 14D) for reading out signals from the first to fourth recording media (12A to 12D) and for outputting signals therefrom, a detector (16) for detecting the audio signals from among the signals output from the first to fourth drives (14A to 14D), and a determining means (30) for determining that the first to fourth recording media (12A to 12D) are defective when the audio signals output from the detector (16) deviate from the constant frequency.

## Description

### BACKGROUND OF THE INVENTION

### Field of the Invention

The present invention relates to a method and apparatus for inspecting a recording medium, for thereby detecting a defect in the recording medium, as well as to a method and apparatus for inspecting a recording medium drive, while reading out signals recorded on the recording medium.

### Description of the Related Art

Various recording media, such as optical information recording media utilizing laser light (DVD, CD, etc.), magneto optical disks, hard disks, flexible disks, semiconductor memories, magnetic tapes, and the like, have been known.

When a video signal is read out from such recording media, the signal is transmitted to a monitor, wherein an image derived from the signal is displayed on the monitor. When an audio signal is read out, the signal is transmitted to a speaker, wherein sound derived from the signal is output from the speaker. Further, when a computer program is read out, the program is stored on a hard disk or in the main memory of a computer system, wherein the program is run by a CPU.

In such applications, when a signal is inappropriately recorded on a recording medium, or when the signal is inappropriately read out although the signal may be recorded appropriately, problems result, for example, in that images become distorted on the monitor, or sounds from the speaker may be interrupted.

Therefore, prior to being sold, the recording media are inspected in order to detect defects in the reproduced data. However, when the recording media are inspected aurally or visually by an inspector, the inspector must watch the images or listen to sounds continuously, resulting in a large burden on the inspector.

A method for inspecting optical disks has been proposed in Japanese Laid-Open Patent Publication No. 2002-222570.

In this conventional inspection method, regenerative signals are read out from an information recording medium, and subjected to demodulation and error correction in order to generate decoding signals. The decoding signals are stored in a data memory, and then are extracted to detect a defect during playing of the audio signals.

A writing number, at which error-corrected decoding signals are stored in the data memory, the number of decoding signals that cannot be corrected, and a reading number at which the decoding signals are extracted from the data memory, are measured. A remaining data amount calculated from the writing number and the reading number, which represents the remaining amount of decoding signals stored in the data memory, is displayed, together with the number of uncorrected decoding signals.

The method is advantageous in that an inspector can evaluate the recording medium merely by checking the number of uncorrected decoding signals, thus resulting in a reduced inspection burden.

In the aforementioned method of Japanese Laid-Open Patent Publication No. 2002-222570, a defect is detected by measuring the amount of signals that are uncorrected, by subjecting the regenerative signals read-out from the information recording medium to demodulation and error correction, in order to generate the decoded signals.

The method disadvantageously requires a dedicated regenerator for modulating and error-correcting the regenerative signals, and thereby the method is poor in versatility. Drives for writing information to as well as reading information from optical disks have been produced by various manufacturers. In order to carry out the aforementioned method, each manufacturer must include a signal processing unit attached to the drive, for measuring the number of uncorrected signals, and a mechanism must be provided for outputting the measured data. Thus, it is difficult to practically implement the method disclosed by Japanese Laid-Open Patent Publication No. 2002-222570.

### SUMMARY OF THE INVENTION

In view of the above problems, an object of the present invention is to provide a method and apparatus for inspecting a recording medium for thereby detecting a defect in the recording medium, wherein the method and apparatus can be used by a small number of inspectors, without incurring a large burden or resulting in a large number of mistakes, and wherein the method and apparatus is excellent in versatility and can be used with various recording media.

Another object of the present invention is to provide a method and apparatus for inspecting a recording medium drive that reads out signals recorded on the recording medium, wherein the method and apparatus can be used by a small number of inspectors, without incurring a large burden or resulting in a large number of mistakes, and wherein the method and apparatus is excellent in versatility and can be used with various types of drives.

According to a first aspect of the present invention, there is provided a method for inspecting a recording medium, for thereby detecting a defect in the recording medium, comprising: a first step of recording an audio signal having a constant frequency on the recording medium; a second step of reading out signals from the recording medium; a third step of detecting the audio signal from the read-out signals; and a fourth step of determining that the recording medium is defective when a detection result of the third step deviates from the constant frequency.

Using the aforementioned method, the recording medium can be inspected by a small number of inspectors in order to detect a defect therein, without incurring a large burden or resulting in a large number of mistakes. Further, the method is excellent in versatility and can be used for inspecting various types of recording media.

In the first aspect of the present invention, in the fourth step, the detection result may be displayed on a monitor. In this case, video signals may be recorded together with audio signals on the recording medium, wherein during the fourth step an image derived from such video signals may be displayed together with the detection result on the monitor.

Further, in the fourth step, when the detection result deviates from the constant frequency, the image displayed on the monitor at this time may be stored in a memory.

According to the first aspect of the present invention, in the third step, the audio signal may be converted into a voltage signal corresponding to the frequency thereof, wherein the recording medium is determined to be defective by comparing the voltage signal with a standard voltage signal corresponding to the constant frequency, when during the fourth step the voltage signal deviates from the standard voltage signal to a predetermined extent.

In this case, the recording medium is determined to be defective when the voltage signal is -3 to -20 dB of the standard voltage signal or less. For example, when the voltage signal is -3 dB, the recording medium is determined to be defective when the voltage signal level is less than about 70.8% of the standard voltage signal level.

In the first aspect of the present invention, the constant frequency is preferably within a range of 100 Hz to 15 kHz, more preferably within a range of 400 Hz to 10 kHz, and even more preferably within a range of 1 kHz ± 2%.

In the first aspect of the present invention, the recording medium may be an optical information recording medium, having a substrate and a recording layer capable of having information recorded thereon by means of laser light irradiation.

According to a second aspect of the present invention, there is provided an apparatus for inspecting a recording medium for thereby detecting a defect in the recording medium, the apparatus comprising: a recording medium drive for reading out signals from a recording medium placed in the drive and outputting the signals, an audio signal having a constant frequency recorded on the recording medium; a detector for detecting the audio signal from among the signals output from the recording medium drive; and determining means for determining that the recording medium is defective when the audio signal output from the detector deviates from the constant frequency.

Using the aforementioned apparatus, the recording medium can be inspected in order to detect a defect, by only a small number of inspectors and without imposing a large load or resulting in a large number of mistakes. Further, the apparatus is excellent in versatility and can be used for inspecting various types of recording media.

According to a third aspect of the present invention, there is provided a method for inspecting a recording medium drive for thereby reading out a signal recorded on a recording medium, comprising: a first step of preparing a non-defective recording medium on which an audio signal having a constant frequency is recorded; a second step of reading out signals from the non-defective recording medium using the recording medium drive; a third step of detecting the audio signal from the read-out signals; and a fourth step of determining that the recording medium drive is defective when the detection result of the third step deviates from the constant frequency.

According to a fourth aspect of the present invention, there is provided an apparatus for inspecting a recording medium drive for thereby reading out a signal recorded on a recording medium, comprising: an inspection subject including a recording medium drive in which a non-defective recording medium is placed, an audio signal having a constant frequency recorded on the non-defective recording medium; a detector for detecting the audio signal from among signals output from the recording medium drive; and determining means for determining that the recording medium drive is defective when the audio signal output from the detector deviates from the constant frequency.

In the third and fourth aspects of the present invention, the recording medium drive, which is used for reading out a signal recorded on a recording medium, can be inspected by only a small number of inspectors, without incurring a large burden or resulting in numerous mistakes. Further, the method and apparatus are extremely versatile and thus can be used for inspecting various types of drives.

As described above, using the method and apparatus of the present invention for inspecting a recording medium, the recording medium can be inspected in order to detect a defect therein, wherein only a small number of inspectors are required, without incurring a large burden or resulting in numerous mistakes. Further, the method and apparatus are extremely versatile and thus can be used for inspecting various types of recording media.

Similarly, using the method and apparatus of the present invention for inspecting a recording medium drive, recording medium drives for reading out signals recorded on recording media can be inspected by only a small number of inspectors, without incurring a large burden or resulting in a large number of mistakes. Further, the method and apparatus are quite versatile and thus can be used for inspecting various types of recording medium drives.

The above and other objects features and advantages of the present invention will become more apparent from the following description when taken in conjunction with the accompanying drawings in which a preferred embodiment of the present invention is shown by way of illustrative example.

### BRIEF DESCRIPTION OF THE DRAWINGS

FIG. 1 is a structural view showing a first inspection system.
FIG. 2 is an explanatory view showing an example of a transition display screen, which is displayed on a monitor.
FIG. 3 is an explanatory view showing an example in which a graph is displayed in a second region of the transition display screen.
FIG. 4 is a flow chart showing operating procedures of the first inspection system.
FIG. 5 is a structural view showing a second inspection system.
FIG. 6 is a flow chart showing operating procedures of the second inspection system.
FIG. 7 is a graph showing the results of an example of the present invention.
FIG. 8 is a table showing the results of a comparative example.

### DESCRIPTION OF THE PREFERRED EMBODIMENTS

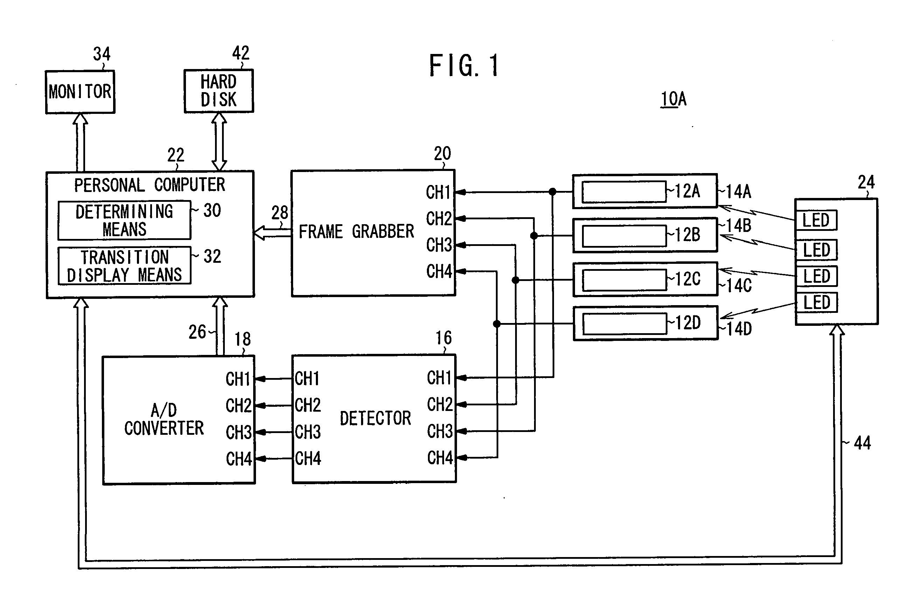

Exemplary embodiments of the recording medium inspecting method, the recording medium inspecting apparatus, the recording medium drive inspecting method, and the recording medium drive inspecting apparatus of the present invention shall be described below with reference to FIGS. 1 through 8.

An inspection system according to a first embodiment of the present invention (hereinafter referred to as a first inspection system 10A), which is used to perform the method of the present invention for inspecting a recording medium to detect a defect therein, shall be described first with reference to FIGS. 1 through 4.

As shown in FIG. 1, the first inspection system 10A comprises inspection subjects made up of first to fourth recording media 12A to 12D. Four drives (first to fourth drives 14A to 14D) are provided for appropriately processing the signals, together with a detector 16, an A/D converter 18, a frame grabber 20, a personal computer 22, and a remote control 24.

For example, the first to fourth recording media 12A to 12D may be selected randomly from a large number of recording media that have been mass-produced.

An audio signal having a constant frequency is recorded beforehand on each of the first to fourth recording media 12A to 12D. The first to fourth recording media 12A to 12D are placed respectively in the first to fourth drives 14A to 14D, wherein signals are read and output from the recording media 12A to 12D by the drives 14A to 14D. The first to fourth drives 14A to 14D are capable of processing and reading out signals that have been recorded appropriately on the media. The first to fourth recording media 12A to 12D may be selected from among optical information recording media on which information is recorded utilizing laser light (DVD, CD, etc.), magneto optical disks, hard disks, flexible disks, semiconductor memories, magnetic tapes, and the like. The first to fourth drives 14A to 14D have mechanisms and signal processing circuits therein, which are suitable for handling the first to fourth recording media 12A to 12D. In the present embodiment, among the various types of media described above, optical information recording media are the most preferred, since the inspection of such optical information recording media is typically time-consuming.

For example, when the first to fourth recording media 12A to 12D are made up of optical information recording media, such as a DVD, an audio signal having a constant frequency is recorded thereon as pit information. Thus, an audio signal having a constant frequency can be recorded in a manner suitable for the various types of first to fourth recording media 12A to 12D.

The constant frequency of the audio signal, which is recorded on the first to fourth recording media 12A to 12D, preferably is within a range of 100 Hz to 15 kHz, more preferably within a range of 400 Hz to 10 kHz, and even more preferably, within a range of 1 kHz ± 2%.

The detector 16 has four-channel input and output terminals, wherein signals output from the first to fourth drives 14A to 14D are input to the detector 16, respectively. By means of the detector 16, audio signals are detected from the input signals.

The detector 16 can convert each of the audio signals into a signal (a voltage signal) having a voltage level that corresponds to the frequency of the audio signal. When the audio signal is converted into a voltage signal, the A/D converter 18, which is connected downstream, has a circuit structure primarily composed of an inexpensive MOS transistor. The audio signal may also be converted into a signal (a current signal) having a current level that corresponds to the frequency of the audio signal, although in this case, the downstream A/D converter typically requires a more complicated circuit structure.

For example, the detector 16 may comprise an RMS-DC converter. In this case, the RMS-DC converter preferably should have a frequency band, including a sound frequency band, of 20 Hz to 20 kHz with input ranges that are variable within each channel, since in certain cases the first to fourth drives may have different output ranges. Further, preferably, the RMS-DC converter has a response speed of 10 msec or less.

The A/D converter 18 includes four-channel input terminals, wherein the A/D converter 18 acts as an analog-digital converter so as to convert the signals output from the detector 16. The A/D converter 18 is connected to a personal computer 22 through a first USB cable 26.

Video signals are input to the frame grabber 20 from the first to fourth drives 14A to 14D, through the four-channel input terminals, respectively. The frame grabber 20 is connected to the personal computer 22 through a PCI bus 28.

The personal computer 22 runs and operates various computer programs. In the first inspection system 10A, a determining means 30 and a transition display means 32 are installed on the personal computer 22 as software.

The determining means 30 determines that the recording medium is defective when properties of the signal output from the detector 16 deviate from the constant frequency. Specifically, the signals (the voltage signals) output from the detector 16 are compared with a signal (a standard voltage signal) having a voltage level (a standard voltage level) that corresponds with the constant frequency. Accordingly, the recording medium is determined to be defective whenever the voltage level of the voltage signal deviates a predetermined extent from the standard voltage level of the standard voltage signal.

In the embodiment of FIG. 1, each signal output from the detector 16 is converted into digital data by the A/D converter 18. Thus, in the determining means 30, a voltage level value derived from digital data of the signal (the voltage signal) output from the detector 16 is compared with the standard voltage level value, which corresponds with the constant frequency, and the recording medium is determined to be defective when the voltage level value deviates a predetermined extent from the standard voltage level value. For purposes of simplifying the description, the voltage level value and the standard voltage level value shall hereinafter be referred to as the voltage level and the standard voltage level, respectively.

In the present embodiment, the phrase "the voltage level deviates a predetermined extent from the standard voltage level " implies that the voltage level is a threshold level or less, wherein the threshold level is -3 to -20 dB of the standard voltage level. For example, the threshold level may be -3 dB, -6 dB, -10 dB, or -20 dB. In the case of -3 dB, the recording medium is judged to be defective when the voltage level of the voltage signal is less than 1/(square root of 2) of the standard voltage level of the standard voltage signal (e.g. 7 V). Thus, when the standard voltage level is 7 V, the recording medium is determined to be defective when the voltage level is less than 7 x {1/(square root of 2)} = approximately 4.96 V.

In the same manner, when the threshold level is -6 dB, the recording medium is determined to be defective when the voltage level is less than 1/2 of the standard voltage level. When the threshold value is -10 dB, the recording medium is determined to be defective when the voltage level is less than 1/3 of the standard voltage level. And when the threshold value is -20 dB, the recording medium is determined to be defective when the voltage level is less than 1/10 of the standard voltage level.

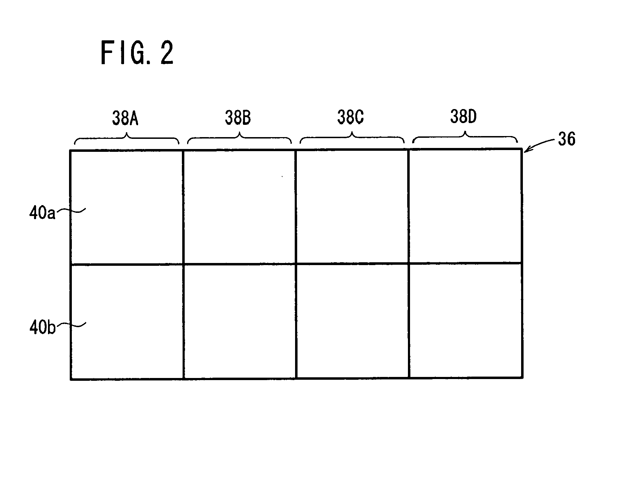

The transition display means 32 functions so as to show a transition display screen 36 on a monitor 34 of the personal computer 22, as shown in FIG. 2.

The transition display screen 36 has four multiple sections (first to fourth sections 38A to 38D), which correspond to the first to fourth drives 14A to 14D.

Each of the first to fourth sections 38A to 38D is divided into 2 regions (first and second regions 40a, 40b), wherein an image derived from the video signal input from the frame grabber 20 is shown in the first region 40a, and a change in the voltage level (the A/D-converted voltage level) of the signals output from the detector 16 is shown in the second region 40b.

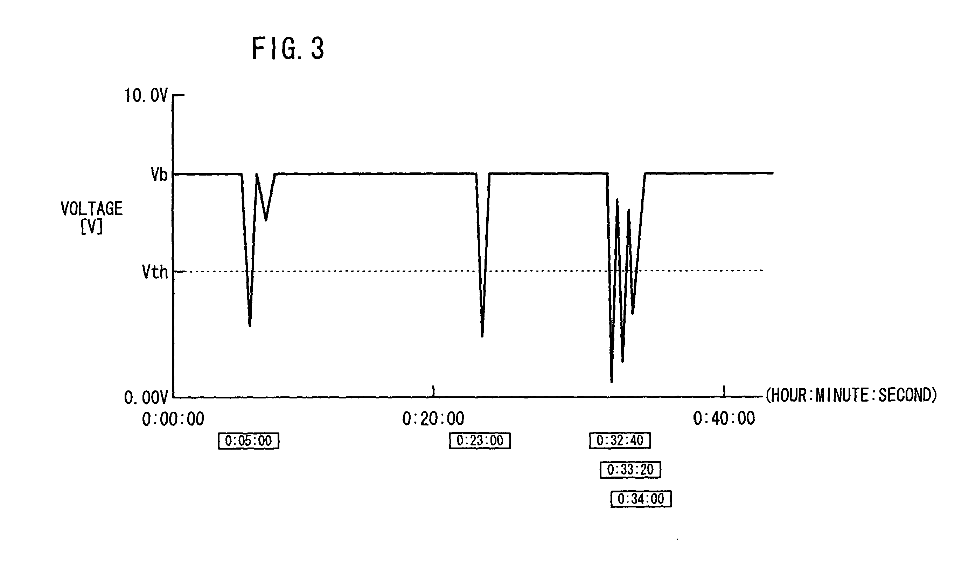

For example, as shown in FIG. 3, a graph is shown in the second region 40b. The horizontal axis of the graph represents time, whereas the vertical axis thereof represents the voltage level. The graph represents, as a voltage waveform, a change in the voltage level of the signal output from the detector 16 over time. Also, the standard voltage level Vb and the determining standard voltage level (i.e., the threshold value level) Vth are shown in the graph. Further, times during which the voltage level is lower than the threshold value level Vth (stated otherwise, when the recording medium is judged to be defective), are shown within the region. Thus, an inspector can easily confirm the times at which defective judgments are made. In the example shown in FIG. 3, times of 0:05:00 (5 minutes), 0:23:00 (23 minutes), 0:32:40 (32 minutes and 40 seconds), 0:33:20 (33 minutes and 20 seconds), and 0:34:00 (34 minutes) are highlighted by a box.

Further, the transition display means 32 functions such that when the detection result deviates from the constant frequency, the image displayed in the first region 40a at this time is stored together with time information, in the hard disk 42 of the personal computer 22.

For example, after judgments of the first to fourth recording media 12A to 12D are completed, the time at which the recording media is determined to be defective, as displayed within the second region 40b of the first section 38A in the transition display screen 36, is specified by a coordinate input device (not shown) (e.g., by clicking a mouse) so as to display the image at the time within the first region 40a. Thus, the defect can be found by observing the image (i.e., distortion of the image). The defect can be evaluated with high accuracy in this case, because the defect is evaluated not by visually observing distortions in a moving image instantaneously, but rather by observing a still image at the time the recording media is judged as being defective.

The remote control 24 controls starting and stopping of the first to fourth drives 14A to 14D by the personal computer 22. The remote control 24 includes four infrared LEDs and an optical receiver (not shown). The remote control 24 is connected to the personal computer 22 by a second USB cable 44.

When the remote control 24 is connected to the personal computer 22 via the second USB cable 44, control codes of infrared remote controls (not shown) for the first to fourth drives 14A to 14D can be read by the personal computer 22, wherein such control codes are stored in the personal computer 22 and can be downloaded into a memory (not shown) contained within the remote control 24. Thus, the remote control 24 can be used for controlling the first to fourth drives 14A to 14D, instead of using infrared remote controls specially designed for the first to fourth drives 14A to 14D.

The remote control 24 has a memory therein for starting and stopping, for each of the four channels, such that the first to fourth drives 14A to 14D can be started and stopped independently and/or simultaneously.

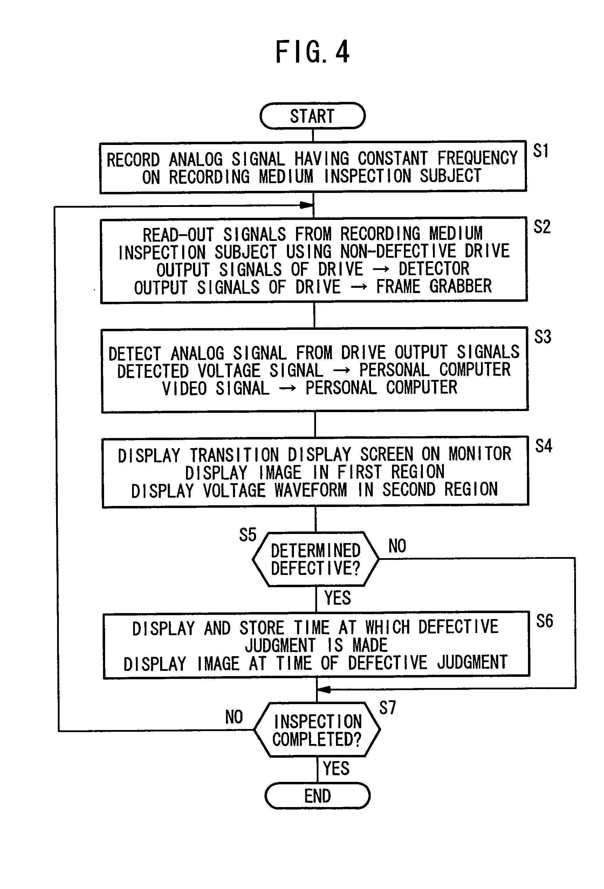

Operations of the first inspection system 10A shall be described below, with reference to the flow chart shown in FIG. 4.

In step S1, as shown in FIG. 4, an audio signal having a constant frequency is recorded on the first to fourth recording media 12A to 12D.

Then, in step S2, the first to fourth recording media 12A to 12D are placed in the first to fourth drives 14A to 14D, respectively, in order to read out signals from the recording media 12A to 12D. The signals that are read-out from the first to fourth recording media 12A to 12D are transmitted to channels of the detector 16 and the frame grabber 20, respectively.

In step S3, audio signals are detected by the detector 16, from the signals output from each of the first to fourth drives 14A to 14D. Thus, within each channel, the audio signal is converted into a signal (a voltage signal) having a voltage level corresponding with its frequency. The output voltage signal from each channel is transmitted downstream to the A/D converter 18, converted into a digital signal, and transmitted to the personal computer 22.

In parallel therewith, video signals are extracted by the frame grabber 20, from signals output from each of the first to fourth drives 14A to 14D. The video signals are transmitted to the personal computer 22 through the PCI bus.

In step S4, the transition display screen 36, having four multiple sections (first to fourth sections 38A to 38D) corresponding to the first to fourth drives 14A to 14D, is displayed on the monitor 34 by the transition display means 32 of the personal computer 22. An image derived from a temporal video signal is displayed within the first region 40a, in each of the first to fourth sections 38A to 38D, and further, a transition waveform of the voltage signal (the voltage level) is displayed within the second region 40b.

In step S5, in the determining means 30 of the personal computer 22, the voltage levels of the four-channel detected voltage signals, which are transmitted from the detector 16 through the A/D converter 18, are compared respectively with the standard voltage level. When the voltage level of a given recording medium deviates from the standard voltage level to a predetermined extent, the recording medium is determined to be defective and then is subjected to step S6.

In step S6, information concerning the time at which the recording medium is determined as being defective is displayed by the transition display means 32, within the second region 40b, in the section thereof corresponding to the recording medium. The time information also is recorded in the hard disk 42, together with channel information (such as the channel number), and further, an image derived from the defective video signal is recorded on the hard disk 42. Thus, the channel corresponding to the defective recording medium, information of the time at which a judgment of defectiveness is made, and the image produced at that time are all stored in the hard disk 42, which serves as a database.

After the first to fourth recording media 12A to 12D have been judged as being non-defective in step S5, or when step S6 is completed, a determination is made in step S7 as to whether inspection of the recording media 12A to 12D is completed. Such a determination is made based on whether the signals recorded on the recording media 12A to 12D have been entirely read out or not.

When the inspection is not yet completed, the first to fourth recording media 12A to 12D are returned to step S2 in order to detect defects therein. By contrast, operation of the first inspection system 10A is stopped when inspection has been completed.

As described above, according to the present embodiment, in the first inspection system 10A, an audio signal having a constant frequency is recorded on each of the first to fourth recording media 12A to 12D, and further, signals are read out from the first to fourth recording media 12A to 12D and audio signals are detected from such read-out signals. When a detection result deviates from the constant frequency, the corresponding recording medium is determined to be defective. Thus, recording media can be inspected in order to detect defects therein, requiring only a small number of inspectors and without incurring a large burden or resulting in a large number of mistakes. Further, the system is highly versatile and thus the system can be used for inspecting various types of recording media.

Although, in the above embodiment, four recording media are simultaneously inspected, the method of the present invention can be also easily used for simultaneously inspecting one, two, three, or five or more recording media.

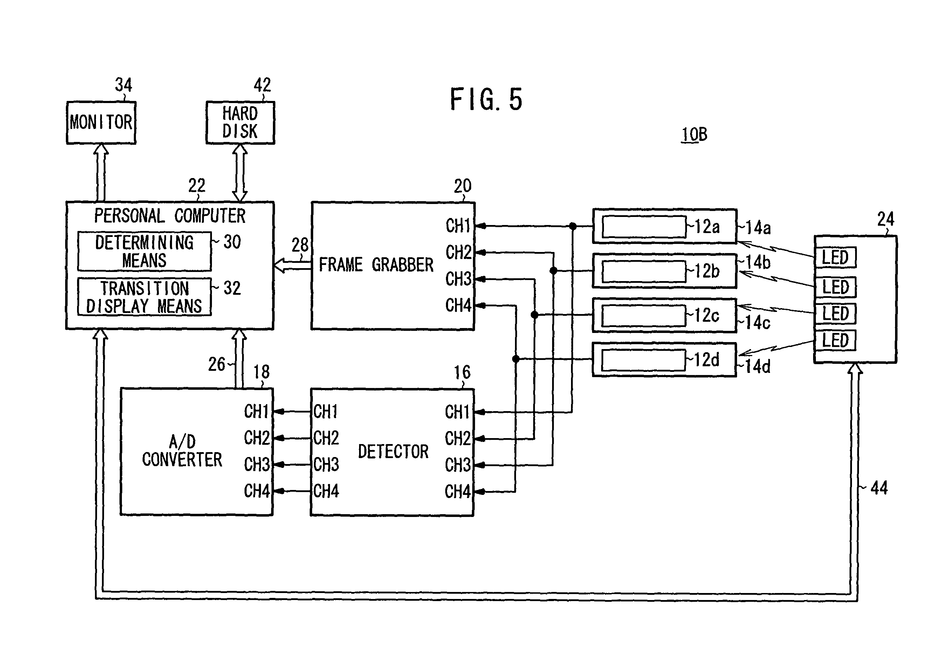

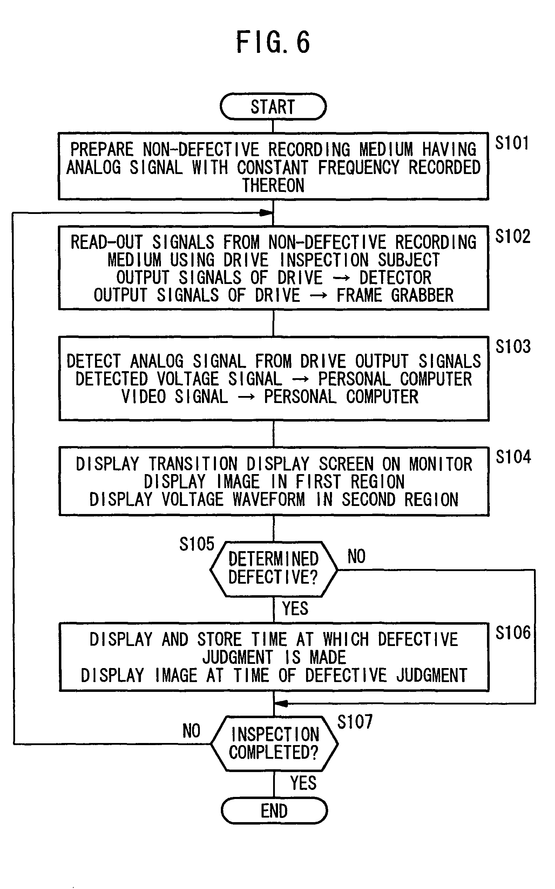

An inspection system according to the second embodiment of the present invention (hereinafter referred to as a second inspection system 10B), which can be used to perform the method for inspecting a recording medium drive according to the present invention, for reading out signals recorded on a recording medium, shall be described below with reference to FIGS. 5 and 6. In the inspection systems 10A and 10B shown in FIGS. 1 and 2, the same components are represented using the same numerals, and hence duplicate explanations of such features shall be omitted.

The structure of the second inspection system 10B is approximately the same as that of the first inspection system 10A, but differs therefrom in that non-defective 11th to 14th recording media 12a to 12d, on which an audio signal having a constant frequency has been recorded, are placed into inspection subjects made up of four drives (11th to 14th drives 14a to 14d), respectively, as shown in FIG. 5. The term "non-defective" implies that, when signals recorded on the 11th to 14th recording media 12a to 12d are read out by the first to fourth drives 14A to 14D in the above-described first inspection system 10A, the 11th to 14th recording media 12a to 12d are determined not to have any defects therein.

The detector 16, the A/D converter 18, the frame grabber 20, the personal computer 22, and the remote control 24, etc., of the second inspection system 10B are the same as those of the first inspection system 10A.

Operations of the second inspection system 10B shall be described below, with reference to the flow chart shown in FIG. 6.

In FIG. 6, in step S101, non-defective 11th to 14th recording media 12a to 12d, on which an audio signal having a constant frequency is recorded, are prepared.

Then, in step S102, the 11th to 14th recording media 12a to 12d are placed in the 11th to 14th drives 14a to 14d, respectively, in order to read out signals from the 11th to 14th recording media 12a to 12d. The read-out signals from the 11th to 14th recording media 12a to 12d are transmitted to channels of the detector 16 and the frame grabber 20, respectively.

In step S103, audio signals are detected by the detector 16, from the signals output from each of the 11th to 14th drives 14a to 14d. Thus, within each channel, the audio signal is converted into a signal (a voltage signal) having a voltage level corresponding with its frequency. The output voltage signal from each channel is transmitted downstream to the A/D converter 18, converted into a digital signal, and transmitted to the personal computer 22.

In parallel therewith, video signals are extracted by the frame grabber 20, from signals output from each of the 11th to 14th drives 14a to 14d. The video signals are transmitted to the personal computer 22 through the PCI bus 28.

In step S104, as shown in FIG. 2, the transition display screen 36, having four multiple sections (first to fourth sections 38A to 38D) corresponding to the 11th to 14th drives 14a to 14d, is displayed on the monitor 34 by the transition display means 32 of the personal computer 22. An image derived from a temporal video signal is displayed within the first region 40a, in each of the first to fourth sections 38A to 38D, and further, a transition waveform of the voltage signal (the voltage level) is displayed within the second region 40b, as shown in FIG. 3.

In step S105, in the determining means 30 of the personal computer 22, the voltage levels of the four-channel detected voltage signals, which are transmitted from the detector 16 through the A/D converter 18, are compared respectively with the standard voltage level. When the voltage level of a given recording medium deviates from the standard voltage level to a predetermined extent, the corresponding drive is determined to be defective and then subjected to step S106.

In step S106, information concerning the time at which the drive is determined to be defective is displayed by the transition display means 32, in the second region 40b, in a section thereof corresponding to the drive. Such time information is recorded on the hard disk 42, together with channel information (such as a channel number). Further, an image derived from the defective video signal is also recorded on the hard disk 42. Thus, the channel corresponding to the defective drive, the time information at which the drive is determined to be defective, and an image at that time, are all stored on the hard disk 42, which serves as a database.

As described above, in the above embodiment concerning the second inspection system 10B, non-defective 11th to 14th recording media 12a to 12d are prepared with an audio signal therein having a constant frequency. Signals are read out from the 11th to 14th recording media 12a to 12d using as inspection subjects the 11th to 14th drives 14a to 14d, wherein audio signals are detected from among the read-out signals. When a detection result deviates from the constant frequency, the corresponding drive is determined to be defective. Thus, recording media drives that read out signals recorded in the recording media can be inspected, requiring only a small number of inspectors and without incurring a large burden or resulting in a large number of mistakes. Further, the system is highly versatile and thus can be used for inspecting various types of drives.

An experimental example shall now be described below. In the experimental example, an inventive example, using the first inspection system 10A to detect defects in a first recording medium 12A, was compared with a comparative example in which the defects were detected solely by visual observation.

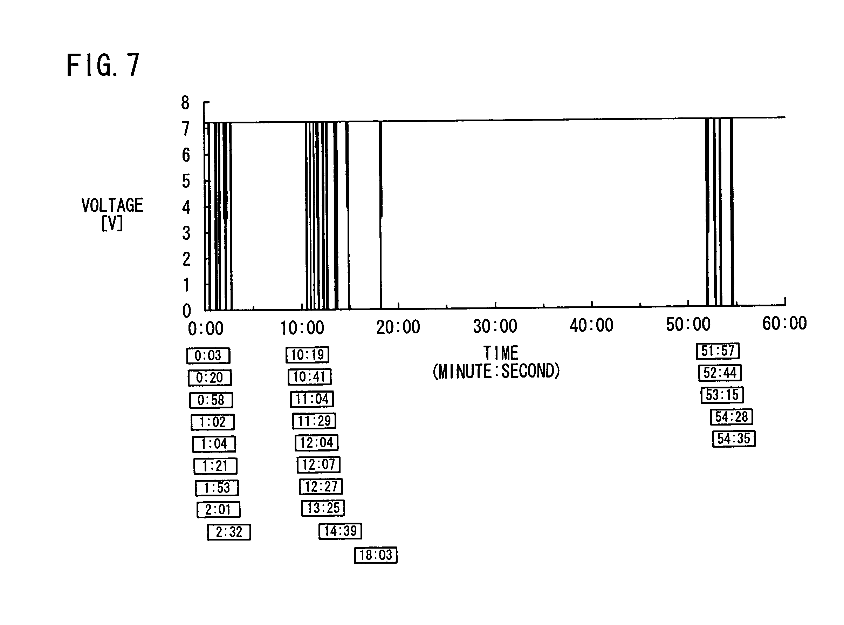

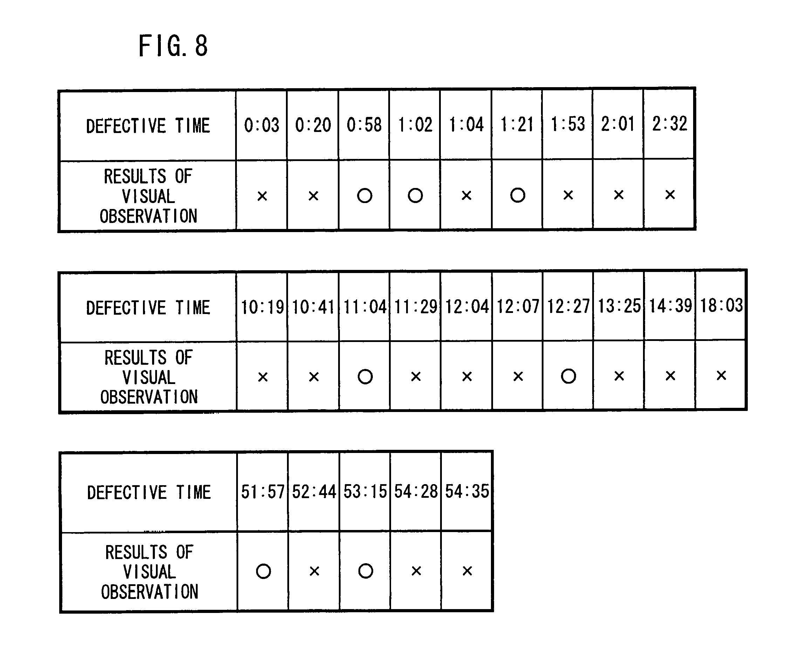

The results of the inventive example are shown in FIG. 7, whereas the results of the comparative example are shown in FIG. 8.

The second region 40b of the first section 38A shown in the transition display screen 36 (FIG. 2) is enlarged, as shown in FIG. 7. In FIG. 7, the values highlighted by squares, such as 0:30, 0:20, and 10:19, indicate times at which the first recording medium 12A was judged to be defective according to the first inspection system 10A. The threshold value level for determining such defects was set at -3 dB.

FIG. 8 is a table showing the results of a visual observation of the comparative example, in contradistinction to times (defective times) at which the first recording medium 12A was judged to be defective in the inventive example. In the table, "x" represents that a defect was unnoticed, whereas "o" represents that the visual observation result was approximately the same as that of the judgment result of the inventive example.

As is clear from the results shown in FIG. 8, several defects, which were detected by the inventive example, could not be found on the basis of visual observation alone, and thus the method of the inventive example was proven to be more excellent in measurement sensitivity than mere visual observation. Sensitivity of the inventive example could be lowered to that of the comparative example by changing the threshold value level.

## Claims

1. A method for inspecting a recording medium, for thereby detecting a defect in the recording medium, comprising:
a first step of recording an audio signal having a constant frequency on a recording medium (12A-12D);
a second step of reading out signals from said recording medium (12A-12D);
a third step of detecting said audio signal from the read-out signals; and
a fourth step of determining that said recording medium (12A-12D) is defective when a detection result of said third step deviates from said constant frequency.

2. A method according to claim 1, wherein
in said fourth step, said detection result is displayed on a monitor (34).

3. A method according to claim 2, wherein
a video signal is recorded together with said audio signal on said recording medium (12A-12D), and
in said fourth step, an image derived from said video signal is displayed together with said detection result on said monitor (34).

4. A method according to claim 3, wherein
in said fourth step, when said detection result deviates from said constant frequency, said image displayed on said monitor (34) is stored in a memory (42).

5. A method according to any one of claims 1 to 4, wherein
in said third step, said audio signal is converted into a voltage signal corresponding to a frequency thereof, and
in said fourth step, said voltage signal is compared with a standard voltage signal corresponding to said constant frequency, and said recording medium (12A-12D) is determined to be defective when said voltage signal deviates from said standard voltage signal to a predetermined extent.

6. A method according to claim 5, wherein
said recording medium (12A-12D) is determined to be defective when said voltage signal is -3 to -20 dB of said standard voltage signal or less.

7. A method according to any one of claims 1 to 5, wherein
said constant frequency is within a range of 100 Hz to 15 kHz.

8. A method according to any one of claims 1 to 7, wherein
said recording medium (12A-12D) is an optical information recording medium comprising a substrate and a recording layer capable of having information recorded thereon by means of laser light irradiation.

9. An apparatus for inspecting a recording medium, for thereby detecting a defect in the recording medium, comprising:
a recording medium drive (14A-14D) for reading out signals from a recording medium (12A-12D) placed in the drive and outputting said signals, an audio signal having a constant frequency recorded on said recording medium (12A-12D);
a detector (16) for detecting said audio signal from among the signals output from said recording medium drive (14A-14D); and
determining means (30) for determining that said recording medium (12A-12D) is defective when said audio signal output from said detector (16) deviates from said constant frequency.

10. A method for inspecting a recording medium drive for thereby reading out a signal recorded on a recording medium, comprising:
a first step of preparing a non-defective recording medium (12a-12d) on which an audio signal having a constant frequency is recorded;
a second step of reading out signals from said non-defective recording medium (12a-12d) using a recording medium drive (14a-14d);
a third step of detecting said audio signal from the read-out signals; and
a fourth step of determining that said recording medium drive (14a-14d) is defective when the detection result of said third step deviates from said constant frequency.
